(19) **Europäisches Patentamt / European Patent Office / Office européen des brevets**

(11) **EP 2 598 728 B1**

(12) **EUROPEAN PATENT SPECIFICATION**

(45) Date of publication and mention
of the grant of the patent:
**20.11.2013 Bulletin 2013/47**

(51) Int Cl.:
*F02B 25/04* (2006.01)  *F02D 9/00* (2006.01)
*F02D 9/04* (2006.01)  *F02D 9/16* (2006.01)
*F02D 13/02* (2006.01)  *F01L 7/12* (2006.01)
*F02B 33/04* (2006.01)  *F01L 7/02* (2006.01)

(21) Application number: **11736371.3**

(22) Date of filing: **27.07.2011**

(86) International application number:
**PCT/EP2011/062931**

(87) International publication number:
**WO 2012/013715 (02.02.2012 Gazette 2012/05)**

(54) **DISCHARGE VALVE ASSEMBLY FOR TWO-STROKE ENGINE, PROVIDED WITH COOLING, NON-CONTACTING SEAL AND SELF-CLEANING**

AUSLASSVENTILVORRICHTUNG FÜR ZWEITAKTMOTOR MIT KONTAKTFREIER DICHTANORDNUNG MIT KÜHLUNG UND SELBSTREINIGUNG

ENSEMBLE DE SOUPAPE D'ÉCHAPPEMENT POUR MOTEUR DEUX-TEMPS, AVEC ÉTANCHÉITÉ SANS CONTACT À REFROIDISSEMENT ET AUTO-NETTOYAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.07.2010 IT AN20100130**

(43) Date of publication of application:
**05.06.2013 Bulletin 2013/23**

(73) Proprietor: **E2F di Esposti Federici Ettore
06039 Trevi (PG) (IT)**

(72) Inventor: **ESPOSTI FEDERICI, Ettore
I-06039 Trevi (PG) (IT)**

(74) Representative: **Baldi, Claudio
Viale Cavallotti, 13
60035 Jesi (AN) (IT)**

(56) References cited:
**EP-A1- 1 975 387**  **WO-A1-99/01644**
**BE-A- 415 977**  **FR-A1- 2 589 519**
**GB-A- 2 191 537**  **GB-A- 191 011 849**
**GB-A- 191 227 644**  **US-A- 3 974 806**
**US-A- 4 388 894**  **US-A- 5 267 535**

# Description

The present patent application for industrial invention relates to a discharge valve assembly for two-stroke engine.

As it is known, a two-stroke engine is an internal combustion engine that provides for an active phase, also defined as expansion, wherein the actual transformation of chemical energy in thermal, and consequently, kinetic energy occurs. Two-stroke engines differ from more popular four-stroke engines mainly in the different alternation of the active phases according to the revolutions of the drive shaft. In fact, four-stroke engines have one active phase for every two revolutions of the shaft, whereas two-stroke engines have one active phase for every complete revolution of the shaft.

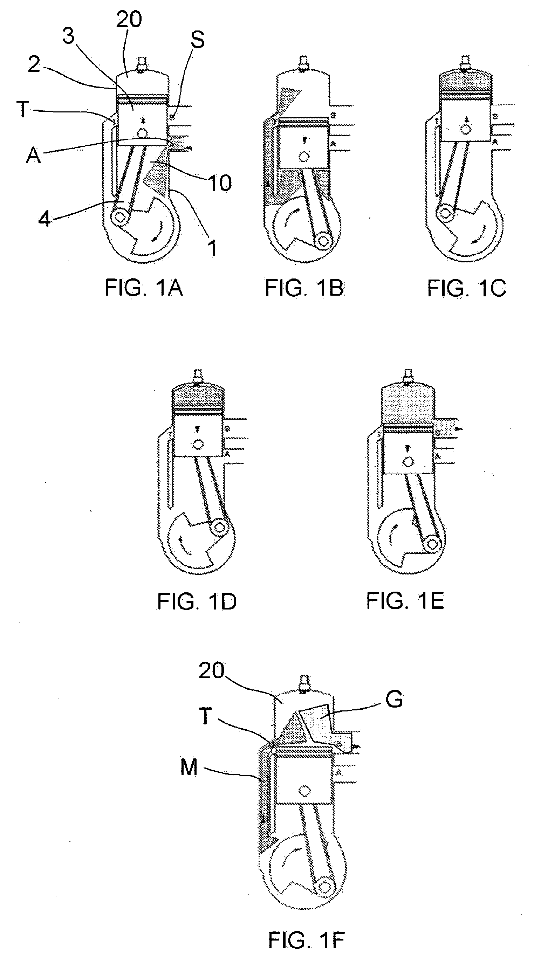

Figs. 1A - 1F diagrammatically illustrate a two-stroke internal combustion engine during the various operation phases. The engine comprises a cover (1), a cylinder (2) mounted on the cover, a piston (3) slidingly mounted in the cylinder and a crank mechanism (4) connecting the piston (3) to a drive shaft. An intake chamber (10) is defined in the cover (1) under the piston and a combustion chamber (20) is defined in the cylinder above the piston.

The cylinder (1) has three ports:

- an intake port (A) to take fuel in the intake chamber (10) of the cover;
- an outlet port (S) to discharge combusted gases from the combustion chamber (20) of the cylinder; and
- a transport port (T) to transport fuel from the intake chamber (10) of the cover towards the combustion chamber (20) of the cylinder.

The ports (A, S, T) are alternatively opened and closed by the piston (3) during its travel inside the cylinder (2).

Referring to Fig. 1A, during the intake phase, the piston (2) rises, determining a depression in the chamber (10) of the cover. Such a depression attracts the air/fuel mixture from the intake port (A) that in general is directly connected with the carburetor.

Referring to Fig. 1B, during the pre-compression/transport phase, the piston (3) goes down and, after obstruction of the intake port (A), the piston creates a pressure in the chamber (10) of the cover that determines the following transport of the mixture when the transport port (T) is opened.

Referring to Fig. 1C, during the ascending travel of the piston, after closing the transport port (T) and discharge port (S), compression occurs, reaching the maximum value immediately before fuel combustion.

Referring to Fig. 1D, after igniting the mixture, gas expansion occurs and the consequent pressure wave, through the piston/crank mechanism assembly, is transformed in rotary motion on the drive shaft.

Referring to Fig. 1E, during the descending travel of the piston, when the discharge port (S) is opened, the expansion phase ends and the discharge phase starts. By using the gas energy, gases are ejected outside from the combustion chamber (20) (exhaust box).

Referring to Fig. 1F, when the piston descends further, it opens the transport port (T) and consequently, in this phase the fuel (M) entering the combustion chamber (20) through the transport port (T) is crossed with the exhaust gases (G) that must leave the combustion chamber (20) through the discharge port (S).

This transport/exhaust phase is a known problem of this type of two-stroke engines. In fact, in such a situation, part of the exhaust gases (G) remains in the combustion chamber (20) and part of the fresh mixture (M) (coming from the transport port (T)) comes out of the outlet port (S). The above results in high engine consumption.

Moreover, such engines provide for the presence of oil in the combustion chamber. With the current architectures is therefore impossible to prevent the oil used to lubricate the crank mechanism and the thermal assembly from following the same process as the fuel with which it is mixed, meaning burnt and ejected. The above results in high environmental pollution.

These drawbacks have been at least partially solved by providing a discharge valve between the outlet port and the exhaust box. Said discharge valve is synchronized with the movement of the piston, in such a way that during the loading phase of the cylinder it guarantees the closing of the cylinder side in communication with the outlet port, avoiding the emission of mixture and uncombusted gases (HC uncombusted hydrocarbons).

Moreover, said discharge valve simultaneously provides the following advantages with respect to a standard engine: reduction of exhaust pollutants (NOx); increase of energy performance; and power increase.

US 5,267,535 describes such an exhaust valve composed of a closing mechanism, provided with axial channel for passage of waste gases and revolvingly mounted in a seat of the cylinder. The external surface of the closing mechanism is in close contact with the internal surface of the seat, thus generating high friction between the closing mechanism and the seat. Consequently, thermal expansion of valve and seat is generated at high operation temperatures of the engine, with consequent seizing of the valve in its seat.

WO99/01644 describes a rotary valve for internal combustion engine provided with seals to minimize gas leaks around the cylindrical rotor of the valve that rotates with radial clearance inside a seat of the valve.

The purpose of the present invention is to devise a highly performing discharge valve for a two-stroke internal combustion engine, adapted to control waste gas emissions through the outlet port, while maintaining the air/fuel mixture inside the combustion chamber.

Another purpose of the present invention is to devise a discharge valve assembly for two-stroke engines that is reliable, efficient, versatile and easy to install and adjust.

Said purposes are achieved according to the present invention, with the characteristics listed in the enclosed independent claim 1.

Advantageous embodiments appear from the dependent claims.

The discharge valve assembly for two-stroke internal combustion engine according to the invention comprises:

- a housing adapted to be mounted in fixed position in the case of said engine, downstream an outlet port of said engine, said housing comprising an inlet connected to said outlet port of the engine and an outlet adapted to be connected with an exhaust box,
- a shutter revolvingly mounted inside said housing and provided with a channel for passage of exhaust gas coming from said outlet port of the engine; said shutter being adapted to rotate from open valve position, in which said channel puts into communication the inlet and the outlet of the housing allowing for passage of exhaust gas, to closed valve position, in which said channel does not put into communication the inlet and the output of the housing, preventing the passage of fluid coming from the outlet port of the engine,
- actuation and synchronization means adapted to drive said shutter into rotation, in synchronous way with respect to the alternate movement of the piston of said engine.

A canal is left between the external surface of said shutter and the internal surface of said housing. Advantageously, the minimum dimension of the canal is 0.0025 multiplied by the diameter of the shutter, in such a way to avoid contact between surfaces and ensure valve operation. This means that the canal can have dimensions higher or equal to 0.0025 multiplied by the diameter of the shutter.

The valve assembly of the invention provides for non-contacting seal, valve cooling and self-cleaning function for dust exhaust. Such a valve allows for increasing the quantity of "fresh charge" in the cylinder and the innovative cooling system of the rotary valve and the valve body eliminates thermal problems for parts. The temperature reduction of the valve assembly positively affects the reduction of NOx pollutants, thus reducing deposits and increasing the part life.

A discharge valve is a technically demonstrated possibility to reduce pollutants at the engine exhaust. The reference market of two-stroke engines is currently declining exclusively because of pollution reasons. The solution of this problem would recover the market and create new fields of application. The valve of the invention also works with turbocharged engines "with direct entry from transport passages (exhaust with port on cylinder wall)". In such a case, and for relatively low pressures, the valve of the invention can work also with direct or indirect injection of (various) fuels. The above, in some applications, may avoid the use of oil in the combustion chamber and consequently the majority of pollutants.

Additional characteristics of the invention will appear evident from the following detailed description that refers to merely illustrative, not limiting embodiments, illustrated in the enclosed drawings, wherein:

Figs. 1A - 1F are six diagrammatic sectional views that show the six operation phases of a two-stroke internal combustion engine according to the known art;

Fig. 2 is a diagrammatic view that shows a two-stroke internal combustion engine provided with exhaust box and discharge valve assembly according to the invention;

Fig. 3 is a cross-sectional view of the valve assembly of the invention along section plane III-III of Fig. 2, with non-sectioned valve;

Fig. 4 is an axial sectional view of the valve assembly along section plane IV-IV of Fig. 3 with valve in open position;

Fig. 4A is the same as Fig. 4, with valve in closed position;

Fig. 5 is a perspective view of the shutter of the valve assembly of the invention;

Fig. 6 is an enlarged view of a detail showing a first improvement of the valve assembly of Fig. 3;

Fig. 6A is a diagram showing the centrifugal speed of particles and the pressure in the valve canal;

Fig. 7 is an enlarged view of a detail showing a second improvement of the valve assembly of Fig. 3;

Figs. 8A and 8B are two enlarged views showing two variants of the valve assembly of Fig. 3; and

Fig. 9 is a partially interrupted sectional view showing an additional embodiment of the valve assembly of the invention.

Referring to the aforementioned figures, the discharge valve assembly of the invention is described, generally indicated with reference numeral (100).

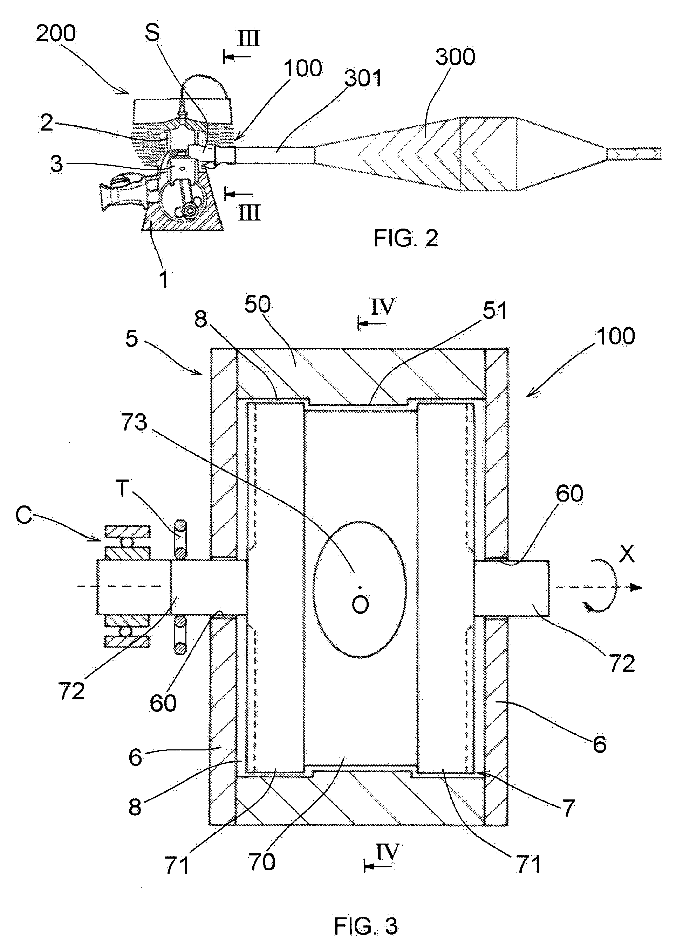

Fig. 2 shows a two-stroke internal combustion engine (200) connected to an exhaust box (300). The elements of the engine (200) are indicated with the same reference numerals used for the description of Figs. 1A - 1F, therefore omitting their detailed description.

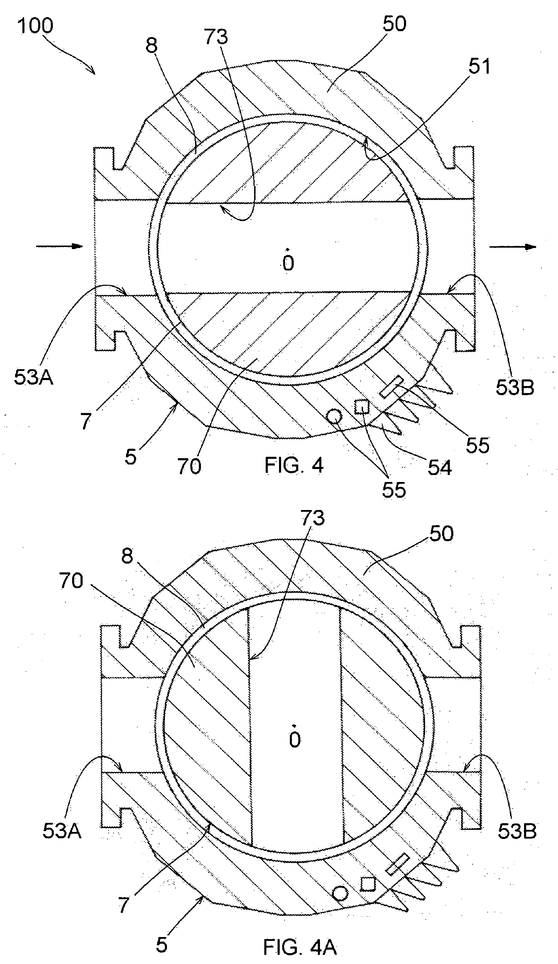

The discharge valve assembly (100) is mounted downstream the outlet port (S) of the cylinder (2) of the engine. The valve assembly (100) can be integrated in the case of the engine (200) or be a separate element that is disposed between the case of the engine (200) and the exhaust box (300). Referring to Figs. 3 and 4, the valve assembly (100) comprises a housing (5) and a shutter (7) revolvingly mounted in the housing (5).

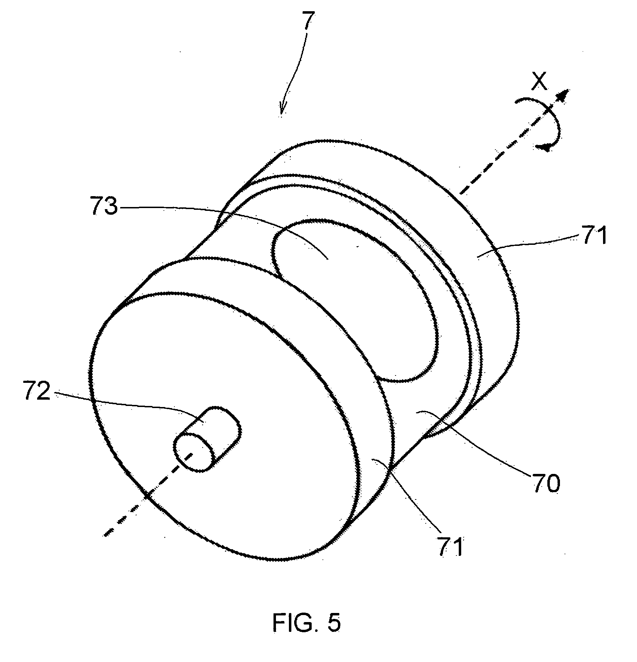

Referring also to Fig. 5, the shutter (7) has a basically cylindrical shape and comprises a central cylindrical body (70) and two basically cylindrical lateral bodies (71) with higher diameter than the central body (70), disposed at the ends of the central body (70). The central body (70) and the lateral bodies (71) have the same axis (X) coincident with the axis of rotation of the shutter. A cylindrical shank (72) axially protrudes outwards from the external surface of each lateral body (71), adapted to be revolvingly supported by suitable supports (not shown in the figures), such as brasses or bearings (C) joined to the housing (7) of the valve or to the case of the engine. A seal (T) is disposed around the shaft (72) between the bearings (C) and the valve body. The two cylindrical shanks (72) form the drive shaft of the shutter.

The central body (70) of the shutter is crossed by a radial channel (73) basically provided with elliptical profile, with center (O) on the axis of rotation (X) of the shutter.

Referring to Fig. 3, the housing (5) comprises a basically cylindrical central portion (50) disposed between two end plates (6). The end plates (6) are provided with axial holes (60) crossed by the shanks (72) of the shutter that are revolvingly engaged in suitable supports. So the shutter (7) is perfectly centered into the housing (5), in such a way that the external surface of the shutter (7) is not in contact with the internal surface of the housing (5), leaving a canal (8) between the external surface of the shutter (7) and the internal surface of the housing (5).

The canal (8) must be suitably dimensioned to offer a good compromise and avoid friction between surfaces and fluid seeping through the canal (8). So, the valve seal is a non-contacting seal. Such a seal occurs because of load loss generated by the canal (8) on the fluid.

In fact, the inventor has surprisingly discovered that tight closing is not necessary, since in high pressure condition the valve finds itself with the canal open and gases leave the canal.

When the shutter closes the valve, there is no gas passage in the canal and pressures are low, since exhaust gases have left and the charge of fresh gases is in terminal phase. Moreover, it must be considered that the rotation speed of the shutter is quite high also at minimum operation condition. Therefore, in case of low pressure, gases have little time to go around the shutter and escape from the exhaust.

According to technical requirements, project and tests, the minimum dimensions of the canal must be higher than the sum of:

- thermal expansion of materials,
- oxidation and deposits,
- mechanical clearances,
- safety margin for accidental causes and worsening variations of the aforesaid parameters.

Taking said parameters into account, the valve is designed in such a way to obtain a canal (8) with dimensions in compliance with the following formula:

$$d \geq 25 * D * 10^{-4}$$

where

d = dimensions of canal (8)
D = diameter of central portion (70) of shutter

The canal (8) must be higher or equal to 0.0025 multiplied by the diameter of the shutter.

Only in exceptional conditions of use (i.e. racing), where time is reduced or materials are special (i.e. ceramic), that is with very accurate surface finishes, it would be possible to go under such value.

The central portion (50) of the housing is provided with a cylindrical collar (51) that protrudes inwards, in such a way to be disclosed between the two lateral bodies (71) of the shutter. In such a way, as shown in Fig. 3, the canal (8) defines a stepped or square-wave route, in correspondence of the central portion (50) of the housing, to increase the difficulty of the fluid in flowing from the central portion (70) of the shutter towards the holes (60) of the end plates of the housing.

Referring to Fig. 4, the central portion (50) of the housing is provided with inlet (53A) and outlet (53B) in diametrally opposite positions, adapted to be connected to the exhaust port (S) of the engine and to the exhaust box (300). The inlet and outlet (53A, 53B) have axis passing through the center (O) of the channel (73) of the shutter. When the valve is open (Fig. 4) the axis of the channel (73) of the shutter coincides with the axis of the inlet and outlet (53A, 53B) of the housing, permitting the passage of exhaust gases coming from the exhaust port (S). Instead, when the valve is closed (Fig. 4A) the axis of the channel (73) of the shutter is basically orthogonal to the axis of the inlet and outlet (53A, 53B) of the housing, preventing the passage of fluid from the exhaust port.

The central portion (50) of the housing is optionally provided with outward-protruding cooling fins (54) and a plurality of cooling channels (55) for circulation of a cooling fluid, in such a way to cool the housing of the valve, avoiding thermal expansion problems.

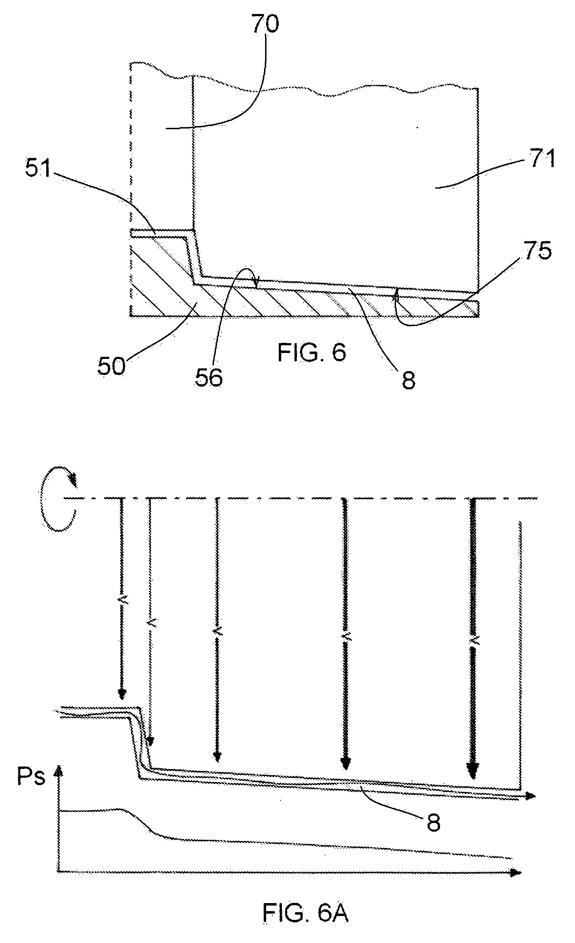

Referring to Fig. 6, advantageously, the two lateral bodies (71) of the shutter have an external lateral surface (75) with truncated-conical or tapered shape, with increasing diameter going outwards. Likewise, the central portion (50) of the housing is provided with tapered internal surface (56) that follows the external surface (75) of the lateral bodies of the shutter, in such a way to maintain the dimensions of the width of the canal (8) basically constant, even if the diameter of the lateral part (71) of the shutter increases going outwards. In order to generate the centrifugal expulsion effect, the coning angles used for the lateral bodies (71) of the shutter can go from a very little value of a few degrees to a very high value, for instance higher than 30°.

It must be considered that during the operation of the valve, the shutter (7) rotates at high speed.

As shown in Fig. 6A, such tapered configuration with increasing diameter of the lateral bodies (71) of the shutter generates a centrifugal forces that increases outwards. So, the transported particles of fluid are accumulated on the outside of the lateral bodies (71) of the shutter by self-centrifugation and their centrifugal speed (V) increases going outwards. Consequently, pressure (Ps) inside the canal decreases going outwards. Therefore, the most external part of the canal (8) (i.e. the part in correspondence of the lateral bodies (71)) is in depression with respect to the central part of the canal (i.e. the part in correspondence of the central body (70)).

Such depression of the peripheral part of the canal favors the separation of the solid parts of the fluid and provides self-cleaning of the canal, avoiding possible deposits of solid parts.

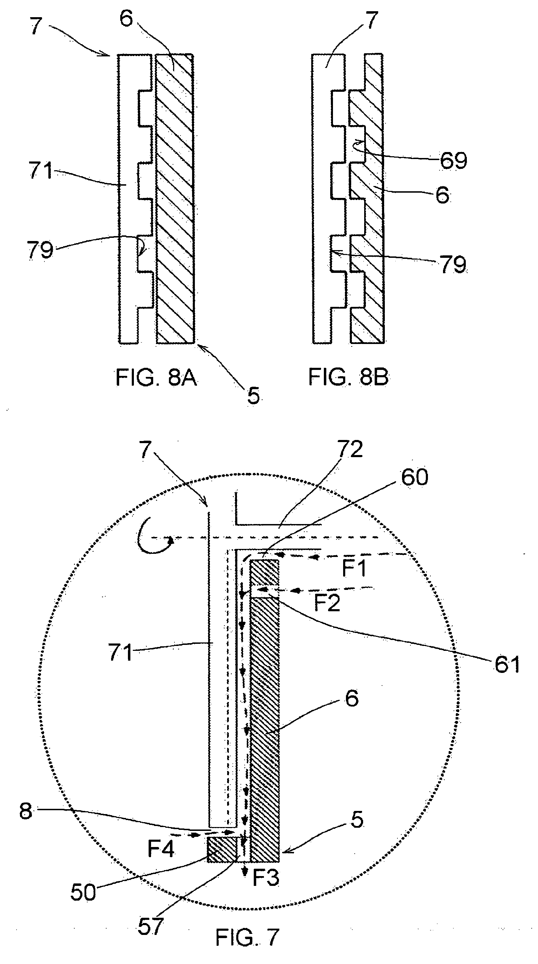

Fig. 7 shows an improvement of the cooling system by means of air extraction from the outside. In this case the shank (72) of the shutter (7) is disposed with some clearance inside the hole (60) of the lateral plate (6) of the housing (5). In this way a flow of cooling air from the outside enters through the axial hole (60) into the canal (8) in the direction of arrows F1.

The lateral plate (6) of the housing may be provided with other axial holes (61) in vicinity of the central hole (60) for entrance of air in the direction of arrows F2.

The central portion (50) of the housing is provided with at least one radial hole (57) disposed in peripheral position, in vicinity of the lateral plate (6) for exit in direction of arrow (F3) of air extracted from outside and fuel particles coming from the central portion of the canal (8) in direction of arrow (F4).

Because of centrifugation imposed by the rotation of the shutter, air is ejected outside, discharging hot air and dust and extracting dust coming from the central portion of the valve.

Such a cooling system can be optimized by increasing the thermal exchange surface of the lateral bodies (71) of the shutter and the end plates (6) of the valve body, by means of labyrinth surfaces, rotary fins, holes or a combination of them.

For instance, Fig. 8A shows an embodiment wherein the external lateral surface of the lateral bodies (71) of the shutter is provided with grooves (79), whereas the internal surface of the end plates (6) of the housing is smooth. Instead, Fig. 8B shows an embodiment wherein also the internal surface of the end plates of the housing is provided with grooves (69).

Fluid and solid substances coming out of the radial hole (57) of the housing are collected, treated and conveyed to the entrance of engine intake or directly to the exhaust. Both solutions contribute to hold the parts clean, thus extending their life and reducing maintenance operations.

Both cleaning and cooling systems can be used either separately or jointly.

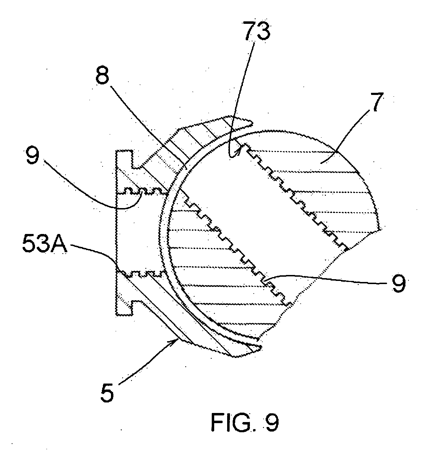

Fig. 9 shows an embodiment wherein impressions (9) are obtained in the inlet and outlet (53A, 53B) of the valve body and in the channel (73) of the shutter to increase the thermal exchange surface, in such a way that exhaust gases give out a higher amount of heat and results improve in terms of contamination.

Impressions (9) can be recessed (grooves, channels and similar) or protruding (ribs, fins, protuberances, and similar). Advantageously, impressions (9) can be channels or ribs disposed in the same direction as the gas, in such a way not to interfere with the gas flow.

The shutter (7) of the valve assembly can rotate by means of an electrical motor that drives into rotation the shaft (72) of the shutter. In such a case, the electrical motor must be provided with encoder to synchronize with the movement of the piston (2) inside the cylinder.

Instead of the electrical motor, to rotate the shutter (7), a mechanical transmission can be provided and connected to the crank mechanism (3) that actuates the piston. If the application allows for it from the technical and economical viewpoint, a control system of electronic, hydraulic or mechanical type can be provided to adjust the tuning anticipation or delay with respect to the drive shaft in order to improve performance. The dimensions, geometrical characteristics and tuning with respect to the drive shaft will determine the best results.

The valve assembly (100) of the invention has the following advantages:

- easy and inexpensive to make (the seal with "fluid canal" allows for geometries with very high clearances, allowing for constructive simplicity, using materials without special surface finishes or treatments).
- high performance and extended life (because of the self-cleaning system, an optimal environment is obtained without any technological effort, guaranteeing extreme cleanness, environmental protection and extended life of parts, avoiding deposits or similar problems).
- reduction of exhausted pollutants because of cooling obtained in a simple, inexpensive way, thus making it possible to use standard parts that work at lower temperatures.

Numerous variations and modifications can be made to the present embodiments of the invention by an expert of the field, while still falling within the scope of the invention as claimed in the enclosed claims.

**Claims**

1. Discharge valve assembly (100) for two-stroke internal combustion engine (200), comprising:

 - a housing (5) mounted in fixed position in the case of said engine (200), downstream an outlet port (S) of said engine, said housing comprising an inlet (53A) connected to said outlet port (S) of the engine and an outlet (53B) adapted to be connected with an exhaust box (300),

- a shutter (7) revolvingly mounted inside said housing (5) and provided with a channel (73) for passage of exhaust gas coming from said outlet port (S) of the engine; said shutter (7) being adapted to rotate from open valve position, in which said channel (73) puts into communication the inlet (53A) and the outlet (53B) of the housing allowing for passage of exhaust gas, to closed valve position, in which said channel does not put into communication the inlet (53A) and the output (53B) of the housing, preventing the passage of fluid coming from the outlet port (S) of the engine,

- actuation and synchronization means adapted to drive said shutter into rotation, in synchronous way with respect to the alternate movement of the piston of said engine,

wherein
between the external surface of said shutter (7) and the internal surface of said housing (5) a canal (8) is left, with dimension higher than or equal to 0.0025 multiplied by the diameter of the shutter, in such a way to avoid contact between surfaces and ensure valve seal,
said shutter (7) has a basically cylindrical shape and is provided with two shanks (72) that protrude axially from the two ends of the shutter,
said shutter (7) comprises a cylindrical central body (70) and two basically cylindrical lateral bodies (71) with higher diameter than the central body (70), and **characterised in that**
said housing (5) is provided with basically cylindrical central portion (50) and two end plates (6) with axial holes (60) for passage of said shanks (72) of the shutter; said central portion (50) comprising a cylindrical collar (51) that protrudes inward and is disposed between said two lateral bodies (71) of the shutter to generated a peripheral canal (8) that follows a stepped or square-wave route.

2. Valve assembly (100) as claimed in claim 1, **characterized in that** said shanks (72) are revolvingly supported by supports (C) mounted in external position in the housing (5) or in the case of the engine.

3. Valve assembly (100) as claimed in claim 2, **characterized in that** said channel (73) radially crosses said central body (70) of the shutter.

4. Valve assembly (100) as claimed in anyone of the preceding claims, **characterized in that** said lateral bodies (71) of the shutter have a tapered or truncated-conical shape with outwards increasing diameter.

5. Valve assembly (100) as claimed in any one of the preceding claims, **characterized in that** said housing (5) has a basically cylindrical shape and comprises at least one axial inlet hole (60, 61) disposed near the axis of the housing, for entrance of cooling air from outside inside the canal (8) and at least one axial outlet hole (57) disposed in a peripheral part of the housing for exit of hot air and dust coming from the canal (8).

6. Valve assembly (100) as claimed in claim 5, **characterized in that** said at least one outlet hole (57) of the housing is connected to an inlet or discharge port of the engine.

7. Valve assembly (100) as claimed in anyone of the preceding claims, **characterized in that** the external lateral surface of the shutter (7) and/or the internal lateral surface of the housing (5) are provided with grooves (79; 69) to maximize heat transfer surface.

8. Valve assembly (100) as claimed in anyone of the preceding claims, **characterized in that** said housing (5) is provided with outwards protruding cooling fins (54).

9. Valve assembly (100) as claimed in anyone of the preceding claims, **characterized in that** said housing (5) is provided with channels (55) for passage of cooling liquid.

**Patentansprüche**

1. Auslassventilgruppe (100) für einen Zweitakt-Brennkraftmotor (200), umfassend:

- einen Sitz (5), der fest im Gehäuse des Motors (200), abstromseitig einer Auslassöffnung (S) des Motors eingebaut ist, wobei der Sitz einen Einlass (53A) umfasst, der mit der Auslassöffnung (S) des Motors verbunden ist, und einen Auslass (53B), der dazu bestimmt ist, mit einem Auspufftopf (300) verbunden zu werden,
- einen Verschluss (7) der drehbar in dem Sitz (5) eingebaut und mit einem Kanal (73) für den Durchlass der aus der Auslassöffnung (S) des Motors kommenden Abgase versehen ist; wobei der Verschluss (7) in der Lage ist, sich aus einer offenen Ventilstellung, in der der Kanal (73) den Einlass (53A) mit dem Auslass (53B) des Sitzes zur Ermöglichung des Durchlasses der Abgase in Verbindung setzt, in eine geschlossene Ventilstellung zu drehen, in der der Kanal den Einlass (53A) nicht mit dem Auslass (53B) in Verbindung setzt, wodurch der Durchlass der aus der Auslassöffnung (S) des Motors kommenden Gase verhindert wird,
- Antriebs- und Synchronisierungsmittel, die dazu bestimmt sind, den Verschluss synchron zur Hin- und Herbewegung des Kolbens des Motors in Drehung zu versetzen,

wobei
zwischen der Außenfläche des Verschlusses (7) und der Innenfläche des Sitzes (5) ein Schlitz (8) frei bleibt, der größer oder gleich dem Durchmesser des Verschlusses multipliziert mit 0,0025 ist, so dass ein Kontakt zwischen den Oberflächen vermieden und die Dichtung des Ventil sichergestellt wird, der Verschluss (7) eine im Wesentlichen zylindrische Form hat und mit zwei Schäften (72) versehen ist, die axial aus den beiden Enden des Verschlusses hervorstehen,
der Verschluss (7) einen mittleren, zylindrischen Körper (70) und zwei seitliche, im Wesentlichen zylindrische Körper (71) mit einem größeren Durchmesser als der mittlere Körper (70) umfasst und **dadurch gekennzeichnet ist, dass**
der Sitz (5) mit einem im Wesentlichen mittleren, zylindrischen Anteil (50) und zwei Endplatten (6) mit zwei axialen Bohrungen (60) für den Durchlass der Schäfte (72) des Verschlusses versehen ist; wobei der mittlere Anteil (50) einen zylindrischen Bund (51) umfasst, der nach innen übersteht und zwischen den beiden seitlichen Körpern (71) des Verschlusses angeordnet ist, um einen peripheren Schlitz (8) zu erzeugen, der einer Stufen- oder Rechteckwellenlinie folgt.

2. Ventilgruppe (100) nach Anspruch 1, **dadurch gekennzeichnet, dass** die Schäfte (72) drehbar durch Stützen (C) abgestützt sind, die außerhalb des Sitzes (5) oder im Gehäuse des Motors eingebaut sind.

3. Ventilgruppe (100) nach Anspruch 2, **dadurch gekennzeichnet, dass** der Kanal (73) den mittleren Körper (70) des Verschlusses radial durchquert.

4. Ventilgruppe (100) nach einem der vorstehenden Ansprüche, **dadurch gekennzeichnet, dass** die seitlichen Körper (71) des Verschlusses eine verjüngte Form oder Kegelstumpfform mit einem nach außen hin zunehmenden Durchmesser aufweisen.

5. Ventilgruppe (100) nach einem der vorstehenden Ansprüche, **dadurch gekennzeichnet, dass** der Sitz (5) eine im Wesentlichen zylindrische Form hat und mindestens eine axiale Einlassbohrung (60, 61) umfasst, die in der Nähe der Achse des Sitzes angeordnet ist für den Einlass der Kühlungsluft von außen in den Schlitz (8), und mindestens eine axiale Auslassbohrung (57), die in einem peripheren Teil des Sitzes angeordnet ist für den Auslass von aus dem Schlitz (8) kommender warmer Luft und Staub.

6. Ventilgruppe (100) nach Anspruch 5, **dadurch gekennzeichnet, dass** mindestens eine Auslassbohrung (57) des Sitzes mit einer Ansaug- oder Auslassöffnung des Motors verbunden ist.

7. Ventilgruppe (100) nach einem der vorstehenden Ansprüche, **dadurch gekennzeichnet, dass** die äußere Seitenfläche des Verschlusses (7) und/oder die innere Seitenfläche des Sitzes (5) mit Rillen (79; 69) versehen sind, um die Wärmeaustauschfläche zu maximieren.

8. Ventilgruppe (100) nach einem der vorstehenden Ansprüche, **dadurch gekennzeichnet, dass** der Sitz (5) mit nach außen überstehenden Kühlrippen (54) versehen ist.

9. Ventilgruppe (100) nach einem der vorstehenden Ansprüche, **dadurch gekennzeichnet, dass** der Sitz (5) mit Kanälen (55) für den Durchfluss von Kühlflüssigkeit versehen ist.

## Revendications

1. Ensemble soupape de décharge (100) pour moteur à combustion interne à deux temps (200), comprenant :

   - un logement (5) destiné à être monté de manière fixe dans le bâti du dit moteur (200), en aval d'un orifice de sortie (S) du dit moteur, ledit logement comprenant une entrée (53A) reliée au dit orifice de sortie (S) du moteur et une sortie (53B) destinée à être reliée à un pot d'échappement (300),
   - un obturateur (7) monté pivotant dans ledit logement (5) et doté d'un conduit (73) pour le passage de gaz d'échappement en provenance du ledit orifice de sortie (S) du moteur ; ledit obturateur (7) pouvant tourner d'une position d'ouverture soupape, où ledit conduit (73) met en communication l'entrée (53A) et la sortie (53b) du logement en permettant le passage des gaz d'échappement, à une position de fermeture soupape où ledit conduit ne met pas en communication l'entrée (53A) et la sortie (53b) du logement, en empêchant le passage de fluide en provenance de l'orifice de sortie (S) du moteur,
   - des moyens d'actionnement et de synchronisation aptes à actionner en rotation ledit obturateur, de manière synchrone par rapport au mouvement alterné du piston du dit moteur,

   où,
   entre la surface externe dudit obturateur (7) et la surface interne dudit logement (5) il y a un méat (8) ayant une dimension majeure ou égale à 0,0025 multipliée par le diamètre de l'obturateur, de manière à éviter le contact entre les surfaces et assurer l'étanchéité de la soupape,

ledit obturateur (7) a une forme substantiellement cylindrique et présente deux tiges (72) qui forjettent axialement des deux extrémités de l'obturateur, ledit obturateur (7) comprend un corps central cylindrique (70) et deux corps latéraux substantiellement cylindriques (71) ayant un diamètre majeur par rapport au corps central (70), et **caractérisé en ce que** ledit logement (5) présente une portion centrale (50) substantiellement cylindrique et deux plaques d'extrémité (6) dotées de trous axiaux (60) pour le passage des dites tiges (72) de l'obturateur ; ladite portion centrale (50) comprenant un collier cylindrique (51) qui déborde vers l'interne et se dispose entre les deux dits corps latéraux (71) de l'obturateur, de manière à générer un méat périphérique (8) qui suit un parcours à marches ou à onde carrée.

2. Ensemble soupape (100) selon la revendication 1, **caractérisé en ce que** lesdites tiges (72) sont supportées pivotantes par des supports (C) montés à l'extérieur du logement (5) ou dans le bâti du moteur.

3. Ensemble soupape (100) selon la revendication 2, **caractérisé en ce que** ledit conduit (73) traverse radialement ledit corps central (70) de l'obturateur.

4. Ensemble soupape (100) selon l'une quelconque des revendications précédentes, **caractérisé en ce que** lesdits corps latéraux (71) de l'obturateur ont une forme conique ou tronconique avec un diamètre croissant en allant vers l'extérieur.

5. Ensemble soupape (100) selon l'une quelconque des revendications précédentes, **caractérisé en ce que** ledit logement (5) a une forme substantiellement cylindrique et comprend au moins un trou axial d'entrée (60, 61), disposé près de l'axe du logement, pour l'admission d'air de refroidissement de l'extérieur dans le méat (8) et au moins un trou radial de sortie (57), disposé sur une partie périphérique du logement pour la sortie de l'air chaud et des poussières en provenance du méat (8).

6. Ensemble soupape (100) selon la revendication 5, **caractérisé en ce que** au moins l'un des trous de sortie (57) du logement est relié à un orifice d'aspiration ou de décharge du moteur.

7. Ensemble soupape (100) selon l'une quelconque des revendications précédentes, **caractérisé en ce que** la surface latérale externe de l'obturateur (7) et/ou la surface latérale interne du logement (5) présentent des rainures (79 ; 69) pour maximiser la surface d'échange thermique.

8. Ensemble soupape (100) selon l'une quelconque des revendications précédentes, **caractérisé en ce que** ledit logement (5) présente des ailettes de refroidissement (54) qui forjettent à l'extérieur.

9. Ensemble soupape (100) selon l'une quelconque des revendications précédentes, **caractérisé en ce que** ledit logement (5) présente des conduits (55) pour le passage d'un fluide de refroidissement.

FIG. 1A          FIG. 1B          FIG. 1C

FIG. 1D          FIG. 1E

FIG. 1F

FIG. 2

FIG. 3

FIG. 4

FIG. 4A

FIG. 5

FIG. 6

FIG. 6A

FIG. 8A    FIG. 8B

FIG. 7

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5267535 A

- WO 9901644 A